# EUROPEAN PATENT SPECIFICATION

(11) **EP 3 804 090 B1**
(45) Date of publication and mention of the grant of the patent: **24.01.2024**
(21) Application number: 19721862.1
(22) Date of filing: 29.03.2019
(51) Int. Cl.: H02K 1/24, H02K 1/27

(54) **ROTOR FOR AN ELECTRICAL MACHINE AND ELECTRICAL MACHINE COMPRISING SAID ROTOR**
ROTOR FÜR EINE ELEKTRISCHE MASCHINE UND ELEKTRISCHE MASCHINE MIT DIESEM ROTOR
ROTOR POUR MACHINE ÉLECTRIQUE ET MACHINE ÉLECTRIQUE COMPRENANT LEDIT ROTOR

(30) Priority: 07.06.2018 WO PCT/IT2018/000082
(43) Date of publication of application: 14.04.2021
(73) Proprietor: Mavel edt S.p.A., 11026 Pont Saint Martin (AO) (IT)
(72) Inventor: FAVRE, Luca, 11026 PONT SAINT MARTIN (AO) (IT); BETTONI, Davide, 11026 PONT SAINT MARTIN (AO) (IT); BORELLO, Fabio, 11026 PONT SAINT MARTIN (AO) (IT)
(74) Representative: Garavelli, Paolo
(86) International application number: PCT/IT2019/000028
(87) International publication number: WO 2019/234772

(56) References cited:
- EP-A1- 2 887 503
- WO-A1-2018/095968
- KR-A- 20130 103 643
- US-A- 5 903 080
- US-A1- 2018 138 764

## Description

The present invention refers to a rotor for an electrical machine, and to an electrical machine comprising said rotor.

In particular, the invention refers to a rotor for a synchronous reluctance electrical machine, of the type with permanent magnets.

An electrical machine typically comprises a fixed part, the stator, and a moving part, the rotor, coaxially arranged one inside the other. Typically, the rotor is placed inside the stator, which comprises electric coils adapted to generate a magnetic field which allows rotating the rotor. The rotor typically comprises a body composed of a pack of sheets and placed on a rotation shaft. In the electrical motor with permanent magnets, the sheets comprise seats for the permanent magnets.

US2018138764 relates to an electric drive motor for a vehicle. The electric drive motor has a stator having a plurality of slots; and a rotor having a plurality of poles. The poles each have at least a first permanent magnet centered on a d-axis of the pole; and a plurality of flux barriers for disrupting at least an n-th order torque harmonic of the electric drive motor. Proximal to an outer surface of the rotor, a first angular period (x11) between first and secondary flux barriers is defined by the equation (xi1=tao/n1), whereby: (xi1) is the first angular period; (tao) is the pole step; and n1 is an order number of a torque harmonic to be disrupted.

US5903080 discloses a reluctance type synchronous motor comprising: a stator with a plurality of slots placed at an even pitch angle wherein stored inside each slot is a stator winding for creating stator magnetic poles with a predetermined phase alternating current being supplied thereto. A rotor sustained by a shaft and changing magnetic reluctance in its circumferential direction by inclusion inside of a plurality of magnetic isolating portions creates desired magnetic poles. At least one of the central angles between magnetic poles created at the rotor is shifted from the other central angles so that torque ripples during rotation can be reduced.

EP2887503 disclosed a rotor used for a magnet-assisted reluctance motor in which the rotor is rotated by reluctance torque and magnet torque. The rotor includes S-pole and N-pole magnets which are arc-shaped in cross-section. Each pole has three magnets, each magnet is embedded in the rotor in such a way that a convex side portion thereof faces center of the rotor. Distance between center of circular arcs of S-pole magnets and center of the rotor is different from distance between center of circular arcs of N-pole magnets and center of the rotor 3. The ratio of the two distances is 0.92. An outer peripheral section of an innermost-layer S-pole magnet is disposed in such a way as to protrude into an adjacent pole zone.

KR20130103643 discloses a rotor having four N poles and four S poles. A first permanent magnet comprising the N pole is asymmetrical to a second permanent magnet comprising the S pole. A first permanent magnet hole and a second permanent magnet hole have curved parts which are convexly curved to the center of a rotor core. The first permanent magnets are symmetrically embedded around the curved part of the first permanent magnet hole. The second permanent magnets are symmetrically embedded around the curved part of the second permanent magnet hole.

WO2018095968 relates to a rotor for an electric machine. The rotor has a plurality of permanent magnets mounted in magnet apertures formed in the rotor. The permanent magnets each have a reference frame comprising a longitudinal central axis, a transverse major axis and a transverse minor axis. The longitudinal central axis of each permanent magnet extends substantially parallel to a rotational axis of the rotor. The rotor has a plurality of magnet poles each have a plurality of the permanent magnets arranged in at least a first layer. The first layer of each magnet pole includes a plurality of said permanent magnets, the permanent magnets in said first layer being arranged such that the transverse minor axis of each permanent magnet extends along a radius of the rotor.

In the electrical machines, and in particular in high performance electrical motors with permanent magnets, an important parameter is given by the air gap between the rotor and the stator: the smaller the air gap, the better the performances of the electrical machine, but this implies costly high-precision workings. A problem of synchronous reluctance electrical machines, of the type with permanent magnets, is given by the vibrations generated by the torque ripples and the counter-electromotive force harmonics, which can generate rotor vibrations and high losses.

An object of the present invention is obtaining a rotor of an electrical machine and an electrical machine which guarantee a better efficiency, allowing to obtain better performances with a big air gap, which implies higher working tolerances of the rotor and lower costs.

Another object of the present invention is reducing the torque ripple and the counter-electromotive force harmonics.

The above and other objects and advantages of the invention, as will result from the following description, are obtained with a rotor for an electrical machine and an electrical machine as claimed in the independent claims.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appear from the enclosed claims.

The present invention will be better described by some preferred embodiments thereof, provided as a non-limiting example, with reference to the enclosed drawings, in which:

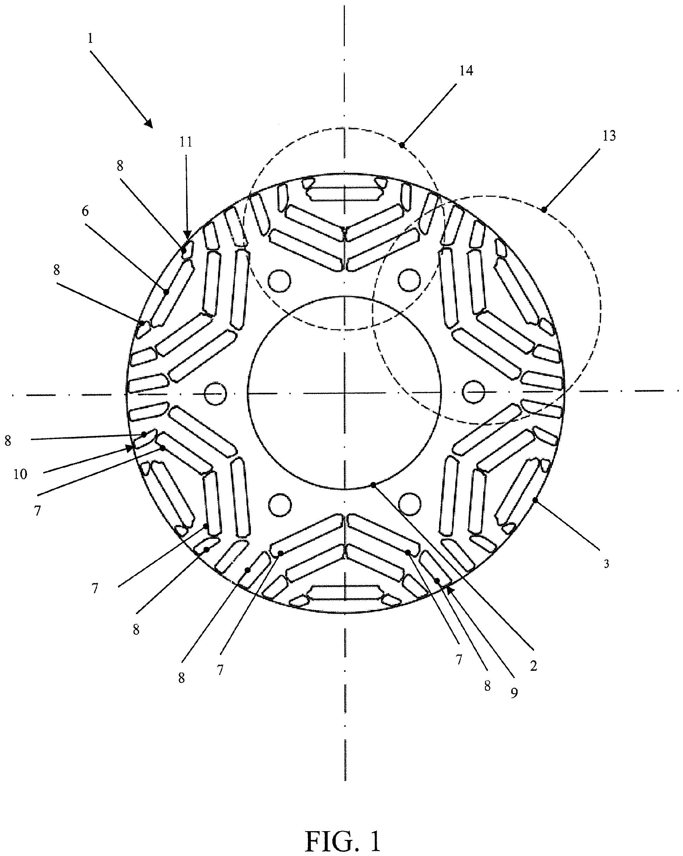

- Figure 1 shows a front view of a rotor for electrical machine according to the invention;
- Figure 2 shows a partial view of two poles and an enlarged detail of a rotor for electrical machine according to the invention; and

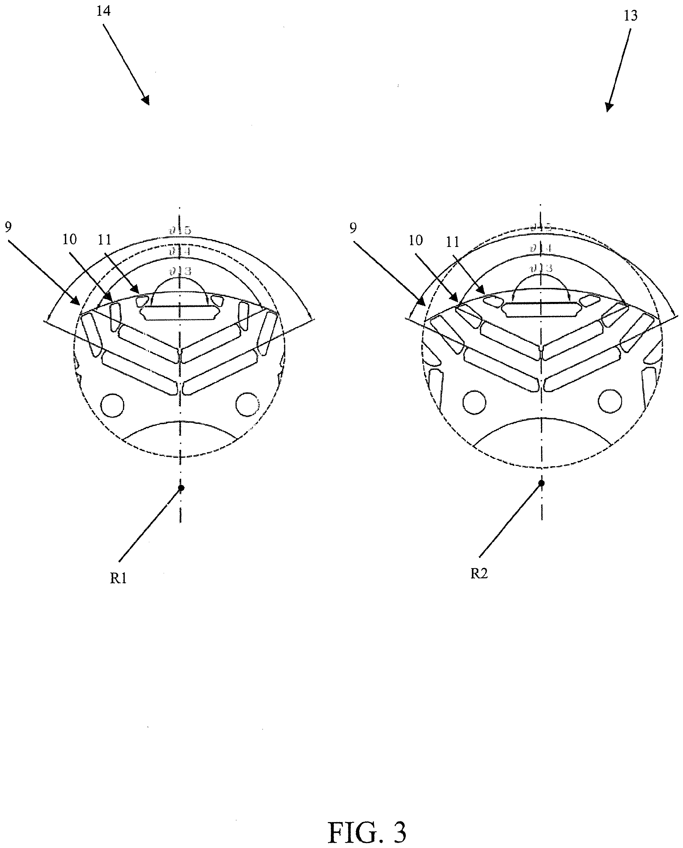

- Figure 3 shows a partial view of two poles of a rotor for electrical machine according to the invention.

With reference to the Figures, the rotor 1 for an electrical machine of the invention comprises: a rotation shaft; a lamellar pack fastened onto the rotation shaft and comprising a plurality of identical sheets 3, comprising a central hole 2 crossed by the rotation shaft and a plurality of axial recesses 6, 7, 8, which cross the sheets 3 from part to part. In particular, each sheet 3 comprises: a plurality of first 6 and second 7 axial recesses, preferably of a trapezoidal, rectangular, parallelogram or squared shape, arranged radially one below the other and mutually spaced, the second axial recesses 7 being inclined from the radial direction; each sheet 3 further comprises magnetic flow generators inserted in the first 6 and second 7 axial recesses, preferably permanent magnets shaped as bars, and a plurality of third axial recesses 8 inclined from the radial direction, which start from the first 6 and second 7 axial recesses to arrive next to the edge of the sheet 3.

Preferably, each sheet 3 comprises a plurality of pairs of second axial recesses 7 having an inclined radial direction, each pair of second axial recesses 7 being inclined and symmetrically arranged with respect to a radius R1, R2 of the sheet 3 passing by the rotation center C of the rotor 1, each of the second axial recesses 7 starting from another second axial recess 7 to arrive to the third axial recess 8 inclined from the radial direction.

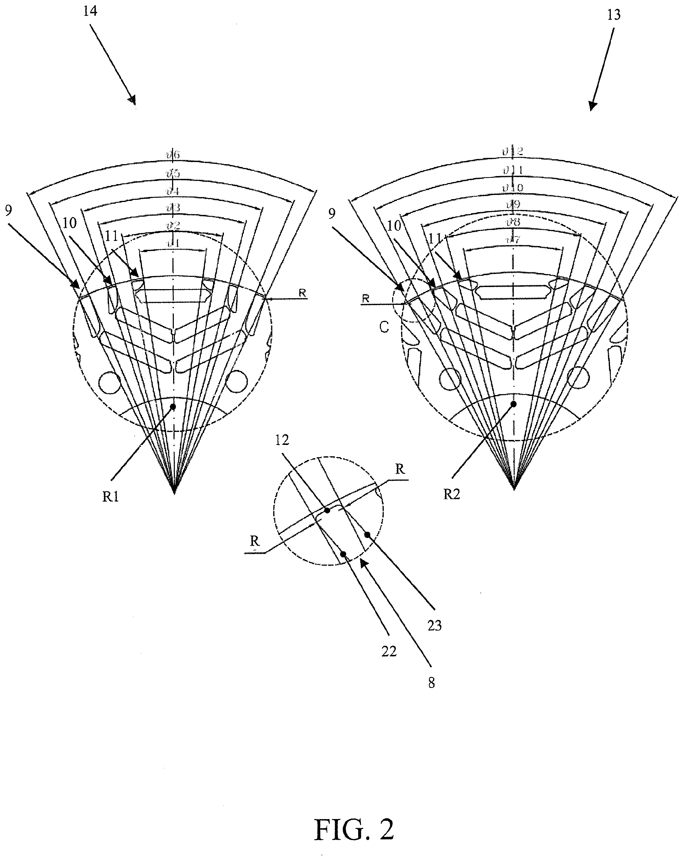

Said third axial recesses 8, having an inclined radial direction, have a surface 12 substantially parallel to the edge of the sheet 3, joined with a first side surface 22 and a second side surface 23 through two connection radiuses R, as shown in the enlarged detail of Figure 2.

In a preferred way, the rotor 1 comprises six magnetic poles 13, 14, each comprising three flow barriers 9, 10, 11: an external flow barrier 9, an intermediate flow barrier 10 and an internal flow barrier 11.

In particular, each flow barrier 9, 10, 11 comprises: a first axial recess 6 adapted to house a flow generator, preferably a permanent magnet; a pair of third axial recesses 8 inclined and symmetrically arranged with respect to said first axial recess 6. In this way, each flow barrier 9, 10, 11 forms a design similar to a "V", whose base is flattened and formed by the first axial recess 6 and whose inclined arms are formed of the pair of second axial recesses 8.

Preferably, the external flow barrier 9 comprises: a first axial recess 6 adapted to house a flow generator, preferably a permanent magnet; a pair of third axial recesses 8 inclined and symmetrically arranged with respect to said first axial recess 6, and forms a design similar to a "V", whose base is flattened and formed by the first axial recess 6 and whose inclined arms are formed of the pair of second axial recesses 8.

Preferably, the intermediate flow barrier 10 and the internal flow barrier 11 comprise: a first axial recess 6 adapted to house a flow generator, preferably a permanent magnet; a pair of second axial recesses 7 having an inclined radial direction and adapted to house a flow generator, preferably a permanent magnet; said pair of second axial recesses 7 being inclined and symmetrically arranged with respect to a radius R1, R2 of the sheet 3 passing by the rotation center C of the rotor 1; a pair of third axial recesses 8 inclined and symmetrically arranged with respect to said first axial recess 6. In this way, each flow barrier 10, 11 forms a design similar to a "V", whose inclined arms are formed of the pair of second axial recesses 7 and third axial recesses 8.

Each flow barrier 9, 10, 11 corresponds to an opening angle θ13, θ14, θ15 which defines the width of the "V" shape.

Said opening angles θ13, θ14, θ15 are located by two straight lines passing each for an internal surface of the first 6 and second 7 inclined axial recesses of each flow barrier 9, 10, 11.

In a preferred way, the rotor 1 comprises three primary magnetic poles 13 and three secondary magnetic poles 14, each comprising three flow barriers 9, 10, 11. In particular, each of the three primary magnetic poles 13 preferably comprises the internal flow barrier 11 whose opening angle θ13 is substantially equal to 180°±10°, the intermediate flow barrier 10 whose opening angle θ14 is substantially equal to 130°±10°, the external flow barrier 9 whose opening angle θ15 is substantially equal to 130°±10°; each of the four secondary magnetic poles 14 preferably comprises an internal flow barrier 11 whose opening angle θ13 is substantially equal to 180°±10°, an intermediate flow barrier 10 whose opening angle θ14 is substantially equal to 130°±10°, an external flow barrier 9 whose opening angle θ15 is substantially equal to 130°±10°.

The width of the three flow barriers 9, 10, 11 of each primary and secondary magnetic pole 13, 14 is defined by locating the opening angles θ1, θ2, ..., θ12, included between two straight lines projected by the theoretical rotation center C of the rotor 1 and each passing by a joining point R of the surface 12, substantially parallel to the edge of the sheet 3 of each third inclined axial recess 8, with the first or with the second side surface 22, 23 of each third axial recess 8 inclined.

In particular, for each flow barrier 9, 10, 11 internal opening angles θ1, θ3, θ5, θ7, θ9, θ11 and external opening angles θ2, θ4, θ6, θ8, θ10, θ12 are located, included between two straight lines projected by the rotation center C of the rotor 1 and passing by the joining point R, or tangent to the joining point R, of the surface 12 substantially parallel to the edge of the sheet 3 of each third inclined axial recess 8 with the first 22 or second 23 side surface of each third inclined axial recess 8.

The following Table 1 lists the values of the opening angles θ1, θ2, ..., θ12 for three pairs of primary magnetic poles 13 and secondary magnetic poles 14 of the rotor 1.

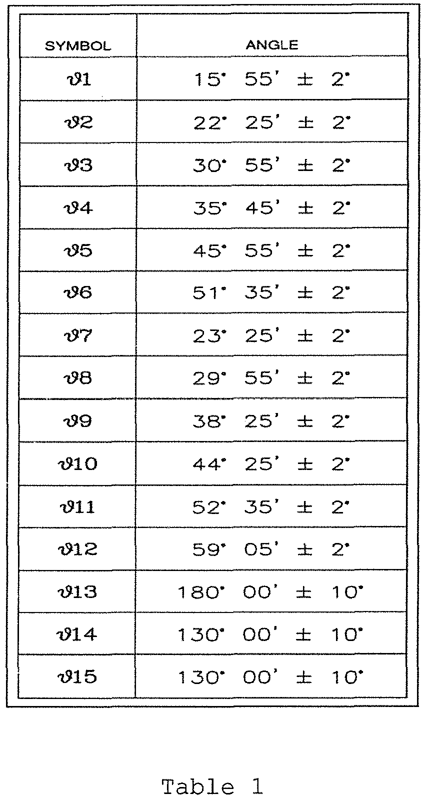

For example, for the previously described rotor 1, having six poles (three pairs of poles), the angle θ1 is equal to 15° 55'± 2°.

In particular, each of the primary magnetic poles 13 comprises: an internal flow barrier 11 whose external opening angle θ8 is included between 27° 55' and 31° 55', in a preferred way substantially equal to 29° 55'; an intermediate flow barrier 10 whose external opening angle θ10 is included between 42° 25' and 46° 25', in a preferred way substantially equal to 44° 25'; an external flow barrier 9 whose external opening angle θ12 is included between 57° 05' and 61° 05', in a preferred way substantially equal to 59° 05'; each of the secondary magnetic poles 14 comprises: an internal flow barrier 11 whose external opening angle θ2 is included between 20° 25' and 24° 25', in a preferred way substantially equal to 22° 25'; an intermediate flow barrier 10 whose external opening angle θ4 is included between 33° 45' and 37° 45', in a preferred way substantially equal to 35° 45'; an external flow barrier 9 whose external opening angle θ6 is included between 49° 35' and 53° 35', in a preferred way substantially equal to 51° 35'.

Moreover, each of the primary magnetic poles 13 comprises: an internal flow barrier 11 whose internal opening angle θ7 is included between 21° 25' and 25° 25', in a preferred way substantially equal to 23° 25'; an intermediate flow barrier 10 whose internal opening angle θ9 is included between 36° 25' and 40° 25', in a preferred way substantially equal to 38° 25'; an external flow barrier 9 whose internal opening angle θ11 is included between 50° 35' and 54° 35', in a preferred way substantially equal to 52° 35'; each of the secondary magnetic poles 14 comprises: an internal flow barrier 11 whose internal opening angle θ1 is included between 13° 55' and 17° 55', in a preferred way substantially equal to 15° 55'; an intermediate flow barrier 10 whose internal opening angle θ3 is included between 28° 55' and 32° 55', in a preferred way substantially equal to 30° 55'; an external flow barrier 9 whose internal opening angle θ5 is included between 43° 55' and 47° 55', in a preferred way substantially equal to 45° 55'.

Preferably, the connection radiuses R between the surface 12 substantially parallel to the edge of the sheet 3 and the first or the second side surface 22, 23 of each axial inclined recess 8 are included within the range 0.2 - 1 mm. Preferably, the rotor 1 comprises alternate primary magnetic poles 13 and secondary magnetic poles 14. In this way, the flow barriers 9, 10, 11 of two consecutive magnetic poles 13, 14 are mutually asymmetrical and this limits, with respect to known electrical machines, the torque ripple and the counter-electromotive force harmonics.

It is anyway possible to have all distance spectra which satisfy the above specified angle values.

In a known way, an electrical machine comprises a fixed part, the stator, and a moving part, the rotor, arranged coaxially one inside the other. Typically, the rotor is placed inside the stator, which comprises electric coils adapted to generate a magnetic field which allows rotating the rotor.

The electrical machine according to the invention further comprises the previously described rotor 1, and between the rotor 1 and the stator, an air gap whose thickness is included between 0.5 mm and 1.5 mm.

## Claims

1. Rotor (1) for electrical machine comprising:
- a rotation shaft;
- a lamellar pack fastened onto the rotation shaft and comprising a plurality of sheets (3), comprising three pairs of primary magnetic poles (13) and secondary magnetic poles (14), each magnetic pole comprising three flow barriers (9, 10, 11), each comprising:
- a first axial recess (6) adapted to house a flow generator;
- a pair of third inclined axial recesses (8), symmetrically arranged with respect to said first axial recess (6) and having a surface (12) substantially parallel to the edge of the sheet (3), joined with a first side surface (22) and a second side surface (23);
the width of the three flow barriers (9, 10, 11) of each primary magnetic pole (13) and secondary magnetic pole (14) being defined by external opening angles (θ2, θ4, θ6, θ8, θ10, θ12) included between two straight lines projected by a theoretical rotation center (C) of the rotor (1) and each tangent to a joining point (R) of the surface (12) substantially parallel to the edge of the sheet (3) of each third inclined axial recess (8) with the first side surface (22) of each third inclined axial recess (8), wherein:
- each of said primary magnetic poles (13) comprises an internal flow barrier (11) whose external opening angle (θ8) is included between 27° 55' and 31° 55', an intermediate flow barrier (10) whose external opening angle (θ10) is included between 42° 25' and 46° 25', an external flow barrier (9) whose external opening angle (θ12) is included between 57° 05' and 61° 05';
- each of said secondary magnetic poles (14) comprises an internal flow barrier (11) whose external opening angle (θ2) is included between 20° 25' and 24° 25', an intermediate flow barrier (10) whose external opening angle (θ4) is included between 33° 45' and 37° 45', an external flow barrier (9) whose external opening angle (θ6) is included between 49° 35' and 53° 35';
the width of the three flow barriers (9, 10, 11) of each primary magnetic pole (13) and secondary magnetic pole (14) being defined by internal opening angles (θ1, θ3, θ5, θ7, θ9, θ11) included between two straight lines projected by a theoretical rotation center (C) of the rotor (1) and each passing by a joining point (R) of the surface (12) substantially parallel to the edge of the sheet (3) of each third inclined axial recess (8) with the second side surface (23) of each third inclined axial recess (8), and wherein:
- each of said primary magnetic poles (13) comprises an internal flow barrier (11) whose internal opening angle (θ7) is included between 21° 25' and 25° 25', an intermediate flow barrier (10) whose internal opening angle (θ9) is included between 36° 25' and 40° 25', an external flow barrier (9) whose internal opening angle (θ11) is included between 50° 35' and 54° 35'; and
- each of said secondary magnetic poles (14) comprises an internal flow barrier (11) whose internal opening angle (θ1) is included between 13° 55' and 17° 55', an intermediate flow barrier (10) whose internal opening angle (θ3) is included between 28° 55' and 32° 55', an external flow barrier (9) whose internal opening angle (θ5) is included between 43° 55' and 47° 55', wherein
- each of said primary magnetic poles (13) comprises an internal flow barrier (11) whose external opening angle (θ8) is substantially equal to 29° 55', an intermediate flow barrier (10) whose external opening angle (θ10) is substantially equal to 44° 25', an external flow barrier (9) whose external opening angle (θ12) is substantially equal to 59° 05'; and
- each of said secondary magnetic poles (14) comprises an internal flow barrier (11) whose external opening angle (θ2) is substantially equal to 22° 25', an intermediate flow barrier (10) whose external opening angle (θ4) is substantially equal to 35° 45', an external flow barrier (9) whose external opening angle (θ6) is substantially equal to 51° 35'.

2. Rotor (1) for electrical machine according to claim 1, **characterized in that**:
- each of said primary magnetic poles (13) comprises an internal flow barrier (11) whose internal opening angle (θ7) is substantially equal to 23° 25', an intermediate flow barrier (10) whose internal opening angle (θ9) is substantially equal to 38° 25', an external flow barrier (9) whose internal opening angle (θ11) is substantially equal to 52° 35'; and
- each of said secondary magnetic poles (14) comprises an internal flow barrier (11) whose internal opening angle (θ1) is substantially equal to 15° 55', an intermediate flow barrier (10) whose internal opening angle (θ3) is substantially equal to 30° 55', an external flow barrier (9) whose internal opening angle (θ5) is substantially equal to 45° 55'.

3. Rotor (1) for electrical machine according to any one of the previous claims, **characterized in that** at least one of the three flow barriers (9, 10, 11) comprises a pair of second axial recesses (7) having an inclined radial direction, each pair of second axial recesses (7) being inclined and symmetrically arranged with respect to a radius (R1, R2) of the sheet (3) passing by the rotation center (C) of the rotor (1).

4. Rotor (1) for electrical machine according to claim 3, **characterized in that** each pair of second axial recesses (7) forms an opening angle (θ14, θ15) located by two straight lines passing each for an internal surface of the second (7) inclined axial recesses of said at least one of the three flow barriers (9, 10, 11), said opening angle (θ14, θ15) being substantially equal to 130°±10°.

5. Electrical machine comprising a fixed part, the stator, and the rotor (1) according to any one of the previous claims, arranged moving inside the stator, **characterized in that** it comprises, between the rotor (1) and the stator, an air gap whose thickness is included between 0.5 mm and 1.5 mm.

## Patentansprüche

1. Rotor (1) für elektrische Maschine umfassend:
- eine Drehwelle;
- ein Lamellenpaket, das auf der Drehwelle befestigt ist und mehrere Lamellen (3) umfasst, die drei Paare primärer Magnetpole (13) und sekundärer Magnetpole (14) umfassen, wobei jeder Magnetpol drei Flussbarrieren (9, 10, 11) umfasst), jeweils bestehend aus:
- einen ersten axialen Hohlraum (6), der einen Strömungsgenerator aufnehmen kann;
- ein Paar dritter geneigter axialer Hohlräume (8), die symmetrisch in Bezug auf den ersten axialen Hohlraum (6) angeordnet sind und eine Oberfläche (12) aufweisen, die im Wesentlichen parallel zum Rand des Blechs (3) verläuft und mit einer ersten Seitenfläche verbunden ist (22) und eine zweite Seitenfläche (23);
wobei die Amplitude der drei Flussbarrieren (9, 10, 11) jedes primären Magnetpols (13) und sekundären Magnetpols (14) durch äußere Öffnungswinkel (θ2, θ4, θ6, θ8, θ10, θ12) zwischen zwei definiert wird gerade Linien, die von einem theoretischen Rotationszentrum (C) des Rotors (1) projiziert werden und jeweils einen Verbindungspunkt (R) der Oberfläche (12) tangieren, der im Wesentlichen parallel zum Rand der Lamelle (3) jedes dritten axialen Hohlraums verläuft (8) geneigt ist, wobei die erste Seitenfläche (22) jedes dritten axialen Hohlraums (8) geneigt ist, wobei:
- die primären Magnetpole (13) umfassen jeweils eine innere Flussbarriere (11), deren äußerer Öffnungswinkel (θ8) zwischen 27° 55' und 31° 55' liegt, und eine mittlere Flussbarriere (10), deren äußerer Öffnungswinkel (θ10) zwischen 42° 25' und 46° 25' liegt, eine äußere Strömungsbarriere (9), deren äußerer Öffnungswinkel (θ12) zwischen 57° 05' und 61° 05' liegt,
- die sekundären Magnetpole (14) umfassen jeweils eine innere Flussbarriere (11), deren äußerer Öffnungswinkel (θ2) zwischen 20° 25' und 24° 25' liegt, und eine mittlere Flussbarriere (10), deren äußerer Öffnungswinkel (θ4) zwischen 33° 45' und 37° 45' liegt, eine äußere Strömungssperre (9), deren äußerer Öffnungswinkel (θ6) zwischen 49° 35' und 53° 35' liegt,
wobei die Amplitude der drei Flussbarrieren (9, 10, 11) jedes primären Magnetpols (13) und sekundären Magnetpols (14) durch die zwischen ihnen enthaltenen internen Öffnungswinkel (θ1, θ3, θ5, θ7, θ9, θ11) definiert ist zwei gerade Linien, die von einem theoretischen Drehzentrum (C) des Rotors (1) projiziert werden und jeweils durch einen Verbindungspunkt (R) der Oberfläche (12) verlaufen, der im Wesentlichen parallel zum Rand des Blechs (3) jeder dritten Achse verläuft Hohlraum (8) geneigt ist, wobei die zweite Seitenfläche (23) jedes dritten axialen Hohlraums (8) geneigt ist, und in dem:
- die primären Magnetpole (13) umfassen jeweils eine interne Flussbarriere (11), deren interner Öffnungswinkel (θ7) zwischen 21° 25' und 25° 25' liegt, und eine mittlere Flussbarriere (10), deren interner Öffnungswinkel (θ9) zwischen 36° 25' und 40° 25' liegt, eine äußere Strömungsbarriere (9), deren äußerer Öffnungswinkel (θ11) zwischen 50° 35' und 54° 35' liegt; und
- die sekundären Magnetpole (14) umfassen jeweils eine innere Flussbarriere (11), deren äußerer Öffnungswinkel (θ1) zwischen 13° 55' und 17° 55' liegt, und eine mittlere Flussbarriere (10), deren äußerer Öffnungswinkel (θ3) zwischen 28° 55' und 32° 55' liegt, eine äußere Strömungssperre (9), deren äußerer Öffnungswinkel (θ5) zwischen 43° 55' und 47° 55' liegt, in dem
- die primären Magnetpole (13) umfassen jeweils eine innere Flussbarriere (11), deren äußerer Öffnungswinkel (θ8) im Wesentlichen gleich 29° 55' ist, und eine mittlere Flussbarriere (10), deren äußerer Öffnungswinkel (θ10) im Wesentlichen gleich ist bis 44° 25', eine äußere Strömungsbarriere (9), deren äußerer Öffnungswinkel (θ12) im Wesentlichen gleich 59° 05' ist; und
- die sekundären Magnetpole (14) umfassen jeweils eine innere Flussbarriere (11), deren äußerer Öffnungswinkel (θ2) im Wesentlichen gleich 22° 25' ist, und eine mittlere Flussbarriere (10), deren äußerer Öffnungswinkel (θ4) im Wesentlichen gleich ist bis 35° 45', eine äußere Strömungsbarriere (9), deren äußerer Öffnungswinkel (θ6) im Wesentlichen gleich 51° 35' ist.

2. Rotor (1) für eine elektrische Maschine nach Anspruch 1, **dadurch gekennzeichnet, dass**:
- die primären Magnetpole (13) umfassen jeweils eine interne Flussbarriere (11), deren interner Öffnungswinkel (θ7) im Wesentlichen gleich 23° 25' ist, und eine mittlere Flussbarriere (10), deren interner Öffnungswinkel (θ9) im Wesentlichen gleich ist bis 38° 25', eine äußere Strömungsbarriere (9), deren äußerer Öffnungswinkel (θ11) im Wesentlichen gleich 52° 35' ist; und
- die sekundären Magnetpole (14) umfassen jeweils eine innere Flussbarriere (11), deren äußerer Öffnungswinkel (θ1) im Wesentlichen gleich 15° 55' ist, und eine mittlere Flussbarriere (10), deren äußerer Öffnungswinkel (θ3) im Wesentlichen gleich ist bis 30° 55', eine äußere Strömungsbarriere (9), deren äußerer Öffnungswinkel (θ5) im Wesentlichen gleich 45° 55' ist.

3. Rotor (1) für eine elektrische Maschine nach einem der vorhergehenden Ansprüche, **dadurch gekennzeichnet, dass** mindestens eine der drei Strömungsbarrieren (9, 10, 11) ein Paar zweiter axialer Hohlräume (7) mit einer Schräge aufweist radialer Richtung, wobei jedes Paar zweiter axialer Hohlräume (7) geneigt und symmetrisch in Bezug auf einen Radius (R1, R2) des Blechpakets (3) angeordnet ist, der durch den Drehpunkt (C) des Rotors (1) verläuft.

4. Rotor (1) für eine elektrische Maschine nach Anspruch 3, **dadurch gekennzeichnet, dass** jedes Paar zweiter axialer Hohlräume (7) einen Öffnungswinkel (θ14, θ15) bildet, der durch zwei gerade Linien identifiziert wird, die jeweils durch eine Innenfläche des zweiten Hohlraums verlaufen geneigte axiale Hohlräume (7) der mindestens einen der drei Strömungsbarrieren (9, 10, 11), wobei der Öffnungswinkel (θ14, θ15) im Wesentlichen gleich 130° ± 10° ist.

5. Elektrische Maschine bestehend aus einem feststehenden Teil, dem Stator, und dem Rotor (1) nach einem der vorhergehenden Ansprüche, der beweglich innerhalb des Stators angeordnet ist, **dadurch gekennzeichnet, dass** sie zwischen dem Rotor (1) und dem Stator einen Luftspalt aufweist mit einer Dicke zwischen 0,5 mm und 1,5 mm.

## Revendications

1. Rotor (1) pour machine électrique comprenant:
- un arbre de rotation;
- un paquet lamellaire fixé sur l'arbre de rotation et comprenant une pluralité de tôles (3), comprenant trois paires de pôles magnétiques primaires (13) et de pôles magnétiques secondaires (14), chaque pôle magnétique comprenant trois barrières de flux (9, 10, 11), comprenant chacun:
- une première cavité axiale (6) apte à loger un générateur de flux;
- une paire de troisièmes cavités axiales inclinées (8), disposées symétriquement par rapport à ladite première cavité axiale (6) et ayant une surface (12) sensiblement parallèle au bord de la tôle (3), reliée à une première surface latérale (22) et une seconde surface latérale (23);
l'amplitude des trois barrières de flux (9, 10, 11) de chaque pôle magnétique primaire (13) et pôle magnétique secondaire (14) étant définie par des angles d'ouverture externes (θ2, θ4, θ6, θ8, θ10, θ12) entre deux droites projetées à partir d'un centre de rotation théorique (C) du rotor (1) et chacune tangente à un point de raccordement (R) de la surface (12) sensiblement parallèle au bord de la tôle (3) de chaque troisième cavité axiale (8) incliné avec la première surface latérale (22) de chaque troisième cavité axiale (8) inclinée, dans lequel:
- lesdits pôles magnétiques primaires (13) comportent chacun une barrière de flux interne (11) dont l'angle d'ouverture externe (θ8) est compris entre 27° 55' et 31° 55', une barrière de flux intermédiaire (10) dont l'angle d'ouverture externe (θ10) est compris entre 42° 25' et 46° 25', une barrière à flux externe (9) dont l'angle d'ouverture externe (θ12) est compris entre 57° 05' et 61° 05';
- lesdits pôles magnétiques secondaires (14) comportent chacun une barrière de flux interne (11) dont l'angle d'ouverture externe (θ2) est compris entre 20° 25' et 24° 25', une barrière de flux intermédiaire (10) dont l'angle d'ouverture externe (θ4) est compris entre 33° 45' et 37° 45', une barrière à flux externe (9) dont l'angle d'ouverture externe (θ6) est compris entre 49° 35' et 53° 35',
l'amplitude des trois barrières de flux (9, 10, 11) de chaque pôle magnétique primaire (13) et pôle magnétique secondaire (14) étant définie par des angles d'ouverture internes (θ1, θ3, θ5, θ7, θ9, θ11) compris entre deux droites projetées à partir d'un centre de rotation théorique (C) du rotor (1) et passant chacune par un point de raccordement (R) de la surface (12) sensiblement parallèle au bord de la tôle (3) de chaque troisième axe cavité (8) inclinée avec la deuxième surface latérale (23) de chaque troisième cavité axiale (8) inclinée, et dans laquelle:
- lesdits pôles magnétiques primaires (13) comportent chacun une barrière de flux interne (11) dont l'angle d'ouverture interne (θ7) est compris entre 21° 25' et 25° 25', une barrière de flux intermédiaire (10) dont l'angle d'ouverture interne (θ9) est compris entre 36° 25' et 40° 25', une barrière à flux externe (9) dont l'angle d'ouverture externe (θ11) est compris entre 50° 35' et 54° 35'; et
- lesdits pôles magnétiques secondaires (14) comportent chacun une barrière de flux interne (11) dont l'angle d'ouverture externe (θ1) est compris entre 13° 55' et 17° 55', une barrière de flux intermédiaire (10) dont l'angle d'ouverture externe (θ3) est compris entre 28° 55' et 32° 55', une barrière à flux externe (9) dont l'angle d'ouverture externe (θ5) est compris entre 43° 55' et 47° 55', dans laquelle
- lesdits pôles magnétiques primaires (13) comportent chacun une barrière de flux interne (11) dont l'angle d'ouverture externe (θ8) est sensiblement égal à 29° 55', une barrière de flux intermédiaire (10) dont l'angle d'ouverture externe (θ10) est sensiblement égal à 44° 25', une barrière à flux externe (9) dont l'angle d'ouverture externe (θ12) est sensiblement égal à 59° 05'; et
- lesdits pôles magnétiques secondaires (14) comportent chacun une barrière de flux interne (11) dont l'angle d'ouverture externe (θ2) est sensiblement égal à 22° 25', une barrière de flux intermédiaire (10) dont l'angle d'ouverture externe (θ4) est sensiblement égal à 35° 45', une barrière à flux externe (9) dont l'angle d'ouverture externe (θ6) est sensiblement égal à 51° 35'.

2. Rotor (1) de machine électrique selon la revendication 1, **caractérisé en ce que**:
- lesdits pôles magnétiques primaires (13) comprennent chacun une barrière de flux interne (11) dont l'angle d'ouverture interne (θ7) est sensiblement égal à 23° 25', une barrière de flux intermédiaire (10) dont l'angle d'ouverture interne (θ9) est sensiblement égal à 38° 25', une barrière à flux externe (9) dont l'angle d'ouverture externe (θ11) est sensiblement égal à 52° 35'; et
- lesdits pôles magnétiques secondaires (14) comportent chacun une barrière de flux interne (11) dont l'angle d'ouverture externe (θ1) est sensiblement égal à 15° 55', une barrière de flux intermédiaire (10) dont l'angle d'ouverture externe (θ3) est sensiblement égal à 30° 55', une barrière à flux externe (9) dont l'angle d'ouverture externe (θ5) est sensiblement égal à 45° 55'.

3. Rotor (1) de machine électrique selon l'une quelconque des revendications précédentes, **caractérisé en ce qu'**au moins l'une des trois barrières d'écoulement (9, 10, 11) comprend une paire de deuxièmes cavités axiales (7) ayant une pente inclinée direction radiale, chaque paire de deuxièmes cavités axiales (7) étant inclinées et disposées symétriquement par rapport à un rayon (R1, R2) de la tôle (3) passant par le centre de rotation (C) du rotor (1).

4. Rotor (1) de machine électrique selon la revendication 3, **caractérisé en ce que** chaque paire de deuxièmes cavités axiales (7) forme un angle d'ouverture (θ14, θ15) repéré par deux droites passant chacune par une surface interne de la deuxième des cavités à poutres axiales inclinées (7) de ladite au moins une des trois barrières d'écoulement (9, 10, 11), ledit angle d'ouverture (θ14, θ15) étant sensiblement égal à 130°±10°.

5. Machine électrique comprenant une partie fixe, le stator, et le rotor (1) selon l'une quelconque des revendications précédentes, disposée de manière mobile à l'intérieur du stator, **caractérisée en ce qu'**elle comporte entre le rotor (1) et le stator un entrefer d'épaisseur comprise entre 0,5 mm et 1,5 mm.
